# EUROPEAN PATENT APPLICATION

(11) **EP 4 559 366 A1**
(43) Date of publication of application: **28.05.2025**
(21) Application number: 24155427.8
(22) Date of filing: 02.02.2024
(51) Int. Cl.: A47J 42/06, A47J 42/46, A47J 42/50

(54) **ELECTRIC GRINDING DEVICE**

(30) Priority: 24.11.2023 TW 112212801 U
(71) Applicant: Kitchen Mama LLC, Wilmington, DE 19801 (US)
(72) Inventor: CHUANG, Shih-Chuan, Wilmington, DE 19801 (US); YAO, Ching-Hsiu, Wilmington, DE 19801 (US); LIU, Mao-Xi, Wilmington, DE 19801 (US)
(74) Representative: Straus, Alexander

(57) **Abstract**

An electric grinding device includes an outer barrel (11), an inner shell (12) disposed in the outer barrel (11) and provided therein with a battery (30) and a motor (40), two guiding channels (C) formed between the outer barrel (11) and the inner shell (12), a hopper (15) located below the two guiding channels (C) and communicating with the two guiding channels (C), and a grinding sleeve (60A) and a grinding head (60B) disposed in the grinding sleeve (60A), which are located below the hopper (15). A grinding gap (G) communicating with the hopper (15) is formed between the grinding head (60A) and the grinding sleeve (60B). The two guiding channels (C) enable the material to be ground to enter the hopper (15) through anyone of the guiding channels (C) smoothly and then enter the grinding gap (G) to be ground into small particles.

## Description

### BACKGROUND OF THE INVENTION

### 1. Field of the Invention

The present invention relates to the technical field of grinding granular seasoning such as salt and pepper granules and more particularly, to an electric grinding device for grinding the aforementioned granular seasoning.

### 2. Description of the Related Art

The traditional electric grinding device for grinding granular seasoning like salt and pepper granules, such as those disclosed in US Patent No. 7077347 and Taiwan Patent No. 1315193, usually has upper and lower shells which are detachably combined with each other, a driving mechanism disposed in the upper shell and including an electric motor and a battery, and a grinding assembly disposed in the lower shell. The lower shell is provided therein with a seasoning accommodating room located between the driving mechanism and the grinding assembly for accommodating salt or pepper granules. In such conventional design, because the driving mechanism and the grinding assembly usually have relatively larger volume, there is constricted space for the arrangement of the seasoning accommodating room. Besides, during the filling with the seasoning, the upper and lower shells and the connecting mechanism between the driving mechanism and the grinding assembly should be dismounted and remounted, which is inconvenient in usage.

China Patent No. 214906146 U disclosed another electric grinding device, wherein the driving mechanism is disposed in the upper shell, and the seasoning accommodating room is formed by the rest space of the upper shell. In this way, in order for accommodating the driving mechanism, the upper shell has relatively larger volume, correspondingly providing the seasoning accommodating room with relatively larger volume. Besides, only a cap which ordinarily closes the top part of the upper shell should be detached before the filling with the seasoning is performed, which is relatively easier in usage. However, the aforementioned patent is not designed with any feeding passageway helpful for the seasoning to enter the grinding space of the grinding assembly, and such electric grinding device is usually hold by the user at various inclined postures for use, thereby liable to have the problem that the seasoning, i.e. the material to be ground, is uneasy to enter the grinding space.

Besides, for the currently commercially available electric grinding devices or the electric grinding devices disclosed in the aforementioned patents, some of them use a press switch for turning on and turning off the electric motor, and some of them use a posture switch to make the electric grinding device automatically turn on the power of the motor when the grinding devices are used in an upright status and automatically turn off the power when the grinding devices are non-used in an upside-down status. However, the electric grinding device arranged with the posture switch is liable to be unintentionally operated because of being tipped when being placed, causing unexpected grinding. In addition, for the conventional electric grinding devices, the mechanism for adjusting the size of the ground particles is complex in structure and inconvenient in usage.

### SUMMARY OF THE INVENTION

The present invention has been accomplished in view of the above-noted circumstances. It is a primary objective of the present invention to provide an electric grinding device which has special feeding channels for the material to be ground to relatively more smoothly enter the grinding space for being ground.

To attain the above objective, the present invention provides an electric grinding device which includes a main body assembly, a battery, a motor, a transmission assembly, a grinding sleeve, and a grinding head. The main body assembly has an outer barrel, an inner shell disposed in the outer barrel, two guiding channels formed between the outer barrel and the inner shell, and a hopper located below the two guiding channels and communicating with the two guiding channels. The battery is disposed in the inner shell. The motor is disposed in the inner shell, and electrically connected with the battery. The transmission assembly is driven by the motor, and has a transmission shaft. The grinding sleeve is located below the hopper. The grinding head is connected to the transmission shaft, and accommodated in the grinding sleeve in a way that a grinding gap communicating with the hopper is formed between the grinding head and the grinding sleeve.

By the above-described feature that two guiding channels are formed between the outer barrel and the inner shell and each communicates with the hopper, no matter at what inclined or upright posture the electric grinding device of the present invention is hold by the user for use, the material accommodated in the guiding channels to be ground can smoothly enter the hopper through one or every one of the guiding channels and then fall into the grinding gap to be ground into small particles.

Preferably, the hopper includes two funneled feeding portions. The two funneled feeding portions communicate with the two guiding channels respectively, and communicate with the grinding gap. In an embodiment, top parts of the two guiding channels are arranged to communicate with each other, and bottom parts of the two guiding channels are separated from each other. Besides, top parts of the two funneled feeding portions are separated from each other, and bottom parts of the two funneled feeding portions communicate with each other. By the above-described technical features, the top parts of the two guiding channels form a collective storage space for the material to be ground, and the material to be ground can be divided and guided into two feeding passageways each formed by the guiding channel and the funneled feeding portion collectively, and collected at bottom parts of the two feeding passageways, i.e. the bottom parts of the two funneled feeding portions, to enter the grinding space. In this way, no matter at what posture the electric grinding device of the present invention is in use, the material to be ground can be ensured to smoothly enter the grinding gap.

Preferably, the outer barrel has an accommodating space which is cone-shaped with a wide top and a narrow bottom, and the inner shell is disposed in the accommodating space. As a result, the inner shell partition off the accommodating space into the two guiding channels which are approximately wide at the top thereof and narrow at the bottom thereof, which is helpful in guiding the material to be ground to enter the hopper downwardly.

Preferably, the inner shell has two guiding surfaces facing the guiding channels respectively. Each of the guiding surfaces is recessed with a guiding groove extending vertically. In this way, not only the storage space for the material to be ground is increased, but it is also helpful in guiding the material to be ground to enter the hopper downwardly.

Preferably, each of the guiding grooves has a recession width which is relatively smaller at a top of the guiding groove and relatively larger at a bottom of the guiding groove, and a recession depth which is relatively smaller at the top of the guiding groove and relatively larger at the bottom of the guiding groove. In this way, it is further helpful in guiding the material to be ground to enter the hopper downwardly.

Preferably, the outer barrel is provided at the top rim thereof with an upward opening. The inner shell has a top portion which is arc-shaped, and the top portion is located lower than the upward opening to cause the top parts of the two guiding channels communication with each other. The inner shell is provided on two opposite sides thereof with two abutting portions. Each of the abutting portions is connected to the inner wall surface of the outer barrel to cause the bottom parts of the two guiding channels to be separated from each other. In this way, a collective storage space for the material to be ground is formed between the top portion of the inner shell and the top rim of the outer barrel, and the arc-shaped top portion of the inner shell is helpful in dividing and guiding the material to be ground into the guiding channels without interference with each other, thereby helpful in guiding the material to be ground to enter the hopper downwardly.

It is another objective of the present invention to provide an electric grinding device which has a special switch design, thereby relatively simpler and more convenient in usage and able to avoid unintentional operation.

To attain the above objective, the electric grinding device provided by the present invention further includes a gravity switch, a scattering assembly, a bottom cover assembly, and a press switch. The gravity switch is electrically connected with the battery. The gravity switch is power-on when being postured upright, and the gravity switch is power-off when being postured upside down. The scattering assembly is connected to the main body assembly to be located below the grinding sleeve and the grinding head. The press switch is disposed on the scattering assembly and electrically connected with the battery. The bottom cover assembly has a pressing portion, and the bottom cover assembly is rotatably disposed on the scattering assembly to enable the pressing portion to contact the press switch to make the press switch power-on and enable the pressing portion to leave the press switch to make the press switch power-off. As a result, the motor, the battery, the gravity switch and the press switch are arranged in a way that only when the gravity switch and the press switch are both power-on, the battery supplies power to the motor to make the motor operate. In this way, the electric grinding device provided by the present invention has dual power switch turning on mechanism which can positively avoid unintentional operation and unexpected turning on. Besides, the press switch is controlled to be power-on and power-off by the hand of the user holding and rotating the bottom cover assembly, which is quite ergonomic, simple and convenient in usage.

Preferably, the scattering assembly has at least one scattering opening and two rotation stopping protrusions. The at least one scattering opening communicates with the grinding gap. The bottom cover assembly has a bottom cover frame and a bottom covering plate disposed in the bottom cover frame. The bottom cover frame has the pressing portion and two rotation stopping recesses, and the bottom covering plate has at least one cover opening. When the bottom cover assembly is rotated relative to the scattering assembly, one of the two rotation stopping recesses is enabled to be engaged with one of the two rotation stopping protrusions to make the pressing portion contact the press switch and the at least one cover opening correspondingly communicate with the at least one scattering opening. When the bottom cover assembly is reversely rotated relative to the scattering assembly, the other rotation stopping recess is enabled to be engaged with the other rotation stopping protrusion to make the pressing portion leave the press switch and the bottom covering plate cover the at least one scattering opening. In this way, the rotational positioning of the bottom cover assembly is very clear, and when the press switch is power-off, i.e. when the electric grinding device is not in use, the scattering opening is covered by the bottom covering plate, which can prevent the residual ground particles from falling out from the scattering opening or preventing foreign objects from entering the scattering opening, ensuring cleanness and hygiene.

It is still another objective of the present invention to provide an electric grinding device which has a special mechanism for adjusting the particle size, thereby convenient and easy in usage.

To attain the above objective, the electric grinding device provided by the present invention further includes an adjusting ring. The adjusting ring is rotatably connected to the main body assembly, and has an internal threaded portion. The main body assembly has an axial concave portion. The grinding sleeve has an axial convex portion and an external threaded portion. The axial convex portion and the axial concave portion are slidably coupled. The external threaded portion is threaded into the internal threaded portion. When the adjusting ring is rotated, the external threaded portion of the grinding sleeve is driven by the internal threaded portion of the adjusting ring so that the grinding sleeve is axially displaced relative to the grinding head to adjust the grinding gap between the grinding sleeve and the grinding head. In other words, the size of the grinding gap is adjusted by the hand of the user holding and rotating the adjusting ring, so as to control the size of the ground particles. The entirety is quite ergonomic, simple and convenient in usage.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The electric grinding device provided by the present invention will be further illustrated in the following embodiment and the accompanying drawings, and wherein:
FIG. 1 is an assembled perspective view of an electric grinding device according to a preferred embodiment of the present invention;
FIG. 2 is another assembled perspective view of the electric grinding device according to the preferred embodiment of the present invention;
FIG. 3 is an assembled sectional view of the electric grinding device according to the preferred embodiment of the present invention;
FIG. 4 is another assembled sectional view of the electric grinding device according to the preferred embodiment of the present invention;
FIG. 5 is an exploded perspective view of the electric grinding device according to the preferred embodiment of the present invention;
FIG. 6 is another exploded perspective view of the electric grinding device according to the preferred embodiment of the present invention;
FIG. 7 is still another exploded perspective view of the electric grinding device according to the preferred embodiment of the present invention;
FIG. 8 is still another exploded perspective view of the electric grinding device according to the preferred embodiment of the present invention;
FIG. 9 is an exploded perspective view of a part of the electric grinding device according to the preferred embodiment of the present invention;
FIG. 10 is an assembled perspective view of a scattering seat and a bottom cover assembly of the electric grinding device according to the preferred embodiment of the present invention; and
FIG. 11 is an assembled perspective view of a bottom cover frame and a bottom covering plate of the electric grinding device according to the preferred embodiment of the present invention.

### DETAILED DESCRIPTION OF THE INVENTION

First of all, it is to be mentioned that the technical features provided by the present invention are unlimited to the specific structure, usage and application thereof described in the detailed description of the invention. It should be understood by those skilled in the related art that all the terms used in the content of the specification are for illustrative description. The directional terms mentioned in this specification, such as 'front', 'upper', 'lower', 'rear', 'left', 'right', 'top', 'bottom', 'inside', and 'outside', are also just for illustrative description on the basis of normal usage direction, not intended to limit the claimed scope.

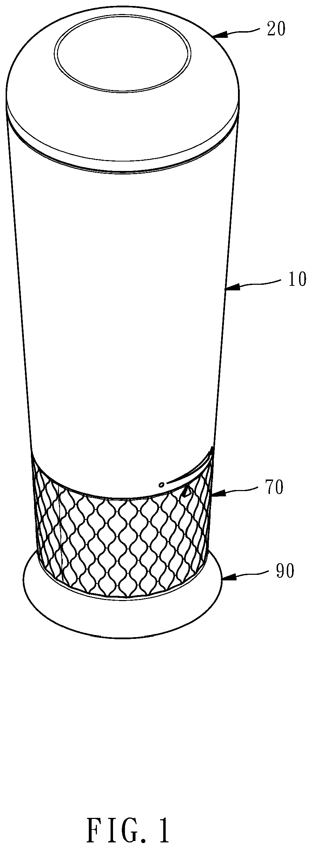

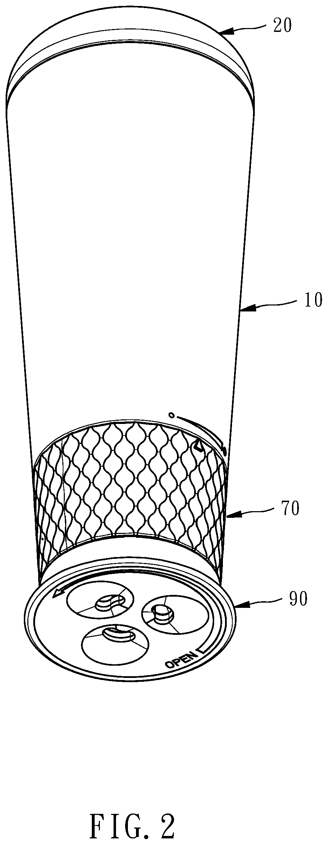

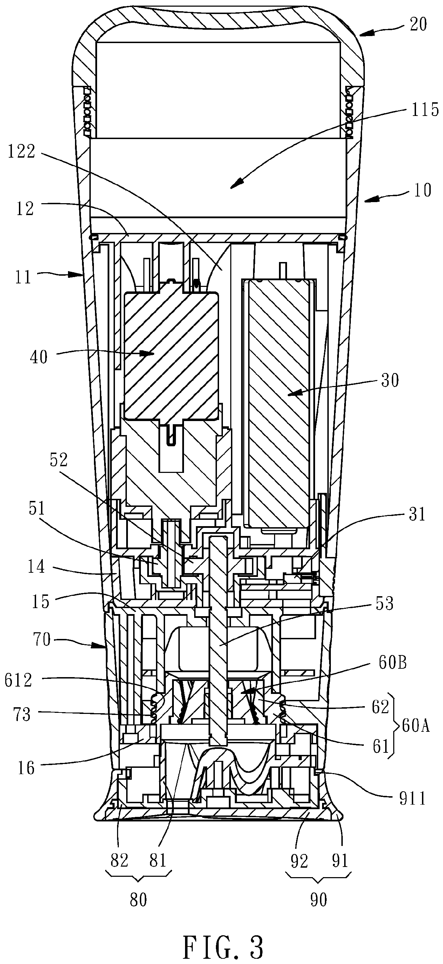

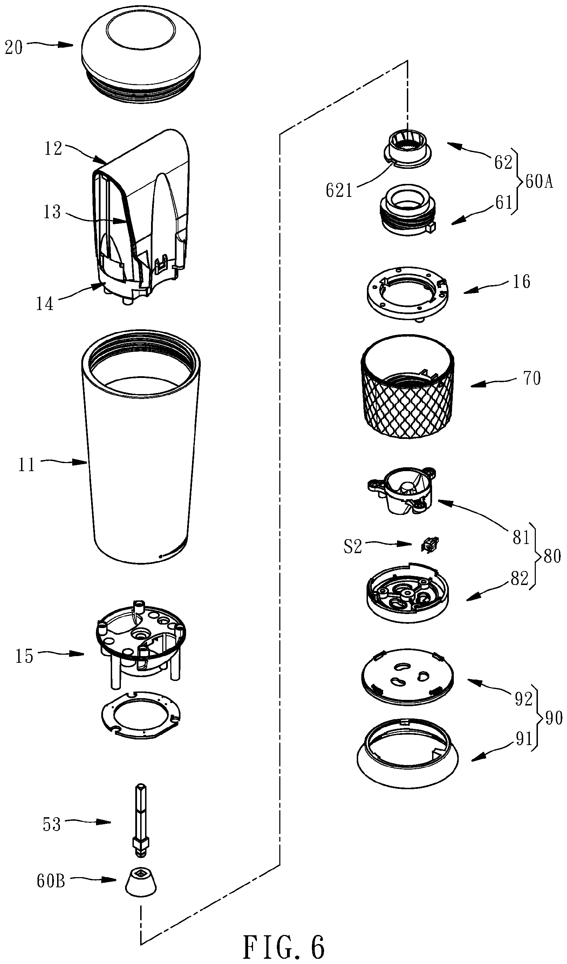

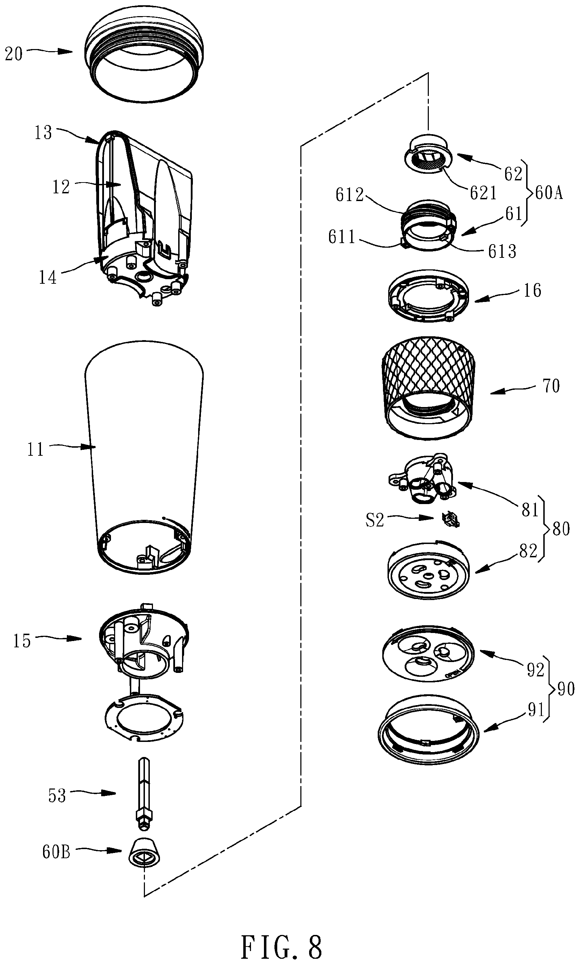

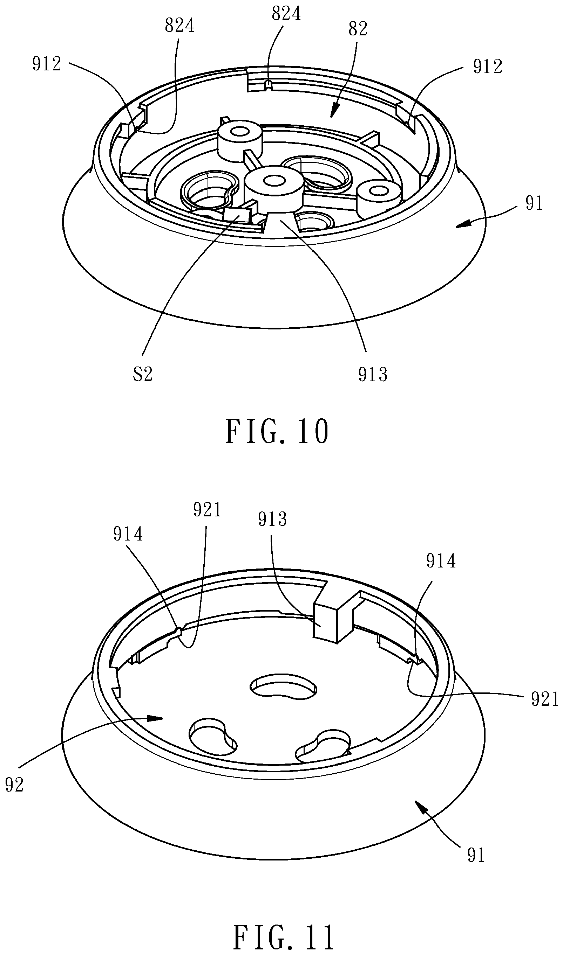

Referring to FIG. 1 to FIG. 11, an electric grinding device according to a preferred embodiment of the present invention primarily includes a main body assembly 10, a top cover 20, a battery 30, a motor 40, a transmission assembly 50, a grinding sleeve 60A, a grinding head 60B, an adjusting ring 70, a scattering assembly 80, and a bottom cover assembly 90. The electric grinding device further includes a gravity switch S1 and a press switch S2.

The main body assembly 10 has an outer barrel 11, an inner shell 12, two sealing strips 13, a bottom shell 14, a hopper 15, and an extending connect seat 16.

The outer barrel 11 has a tube portion 111 which is approximately cone-shaped, an upward opening 112 located at the top rim of the tube portion 111, and four fastening portions 113 located on the inner wall surface of the bottom rim of the tube portion 111. Specifically speaking, the outer barrel 11 has an inner accommodating space 115 which is cone-shaped with a wide top and a narrow bottom.

The inner shell 12 is disposed in the accommodating space of the outer barrel 11. The inner shell 12 is provided on two opposite sides thereof with two abutting portions 121, provided therein with an accommodating portion 122, and provided on two other opposite sides thereof with two buckling holes 123 and four fastening portions 124. The top portion of the inner shell 12 is arc-shaped, and located lower than the upward opening 112 of the outer barrel 11. The four fastening portions 124 correspond to the fastening portions 113 of the outer barrel 11 respectively.

The two sealing strips 13 are disposed between the abutting portions 121 on two sides of the inner shell 12 and the inner wall surface of the outer barrel 11 respectively.

The bottom shell 14 has two buckling tabs 141, four fastening portions 142, and four lower fastening pillars 143. The two buckling tabs 141 are buckled with the buckling holes 123 respectively.

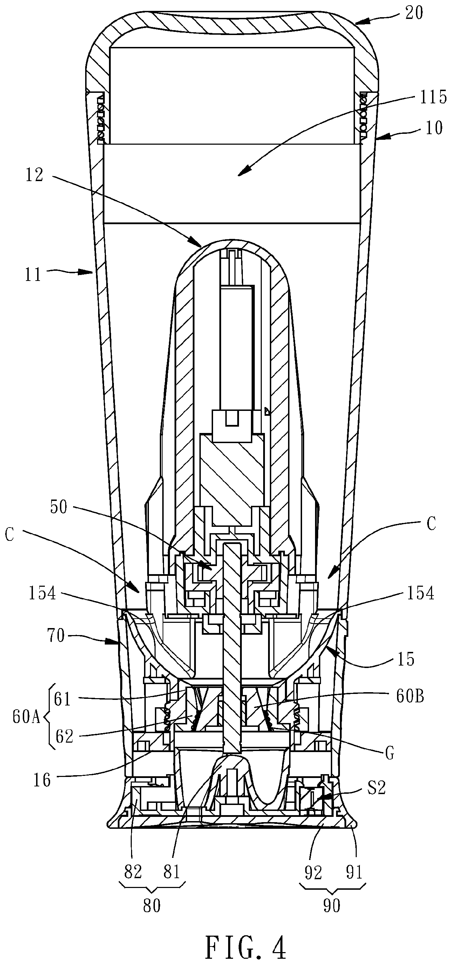

The outer barrel 11, the inner shell 12 and the bottom shell 14 are combined in a way that screws (not shown) are respectively inserted through the fastening portions 142 of the bottom shell 14 and the fastening portions 124 of the inner shell 12, and threaded into the fastening portions 113 of the outer barrel 11. In this way, a guiding channel C is formed between each of two opposite sides of the inner shell 12 and the bottom shell 14, which are also called guiding surfaces 127 hereinafter, and the inner wall surface of the outer barrel 11. In other words, the present invention is provided with two guiding channels C. The top parts of the two guiding channels C communicate with each other, and the bottom parts of the two guiding channels C are separated from each other (as shown in FIG. 4). Besides, each guiding surface 127 is recessed with a guiding groove 129 extending vertically and having a recession width which is relatively smaller at the top of the guiding groove and relatively larger at the bottom of the guiding groove, and a recession depth which is relatively smaller at the top of the guiding groove and relatively larger at the bottom of the guiding groove. In this way, a material storing space for accommodating the granules to be ground is formed by the inner accommodating space 115 of the outer barrel 11 except the part occupied by the inner shell 12 and the bottom shell 14. Besides, as shown in FIG. 4, the guiding channel C is shaped with a wide top and a narrow bottom. In coordination with the cone-shaped tube portion 111 and the aforementioned guiding groove 129, no matter what posture the electric grinding device of the present invention in use is inclined to, the granules to be ground can be smoothly guided to flow downwardly to the lower opening of the guiding channel C and enter the hopper 15 (specified hereinafter) located below the guiding channel C.

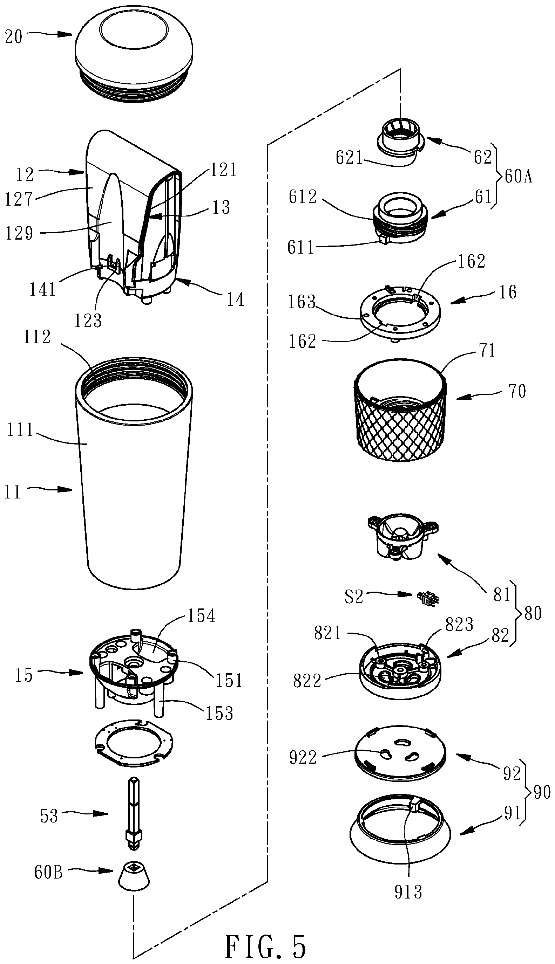

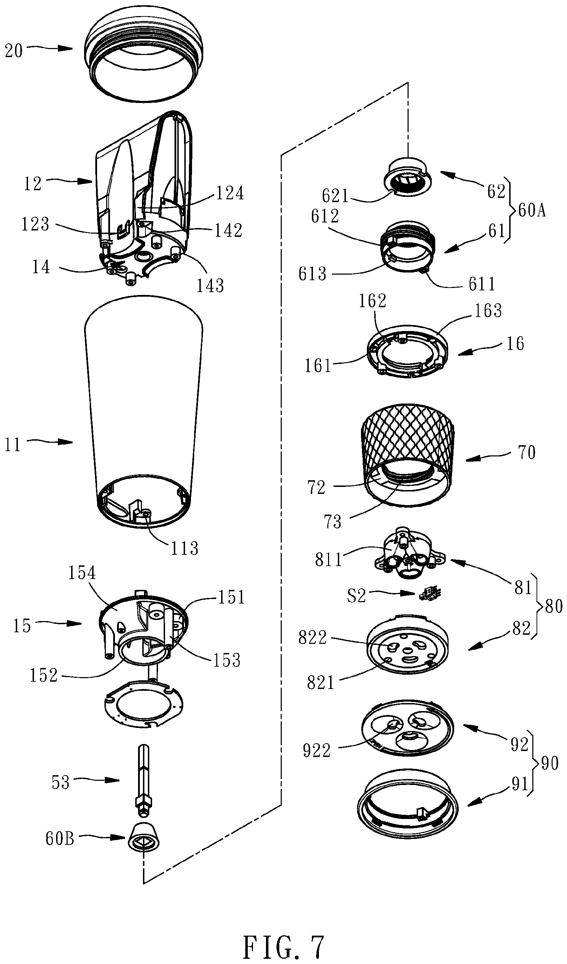

Specifically speaking, the hopper 15 is connected to the bottom of the bottom shell 14, and the hopper 15 is abutted against the bottom rim of the outer barrel 11. The hopper 15 has four pillar receiving holes 151, a grinding sleeve installation portion 152, three extending rods 153, and two funneled feeding portions 154. The top parts of the two funneled feeding portions 154 are separated from each other (as shown in FIG. 5), and communicate with the bottom parts of the guiding channels C respectively. The bottom parts of the two funneled feeding portions 154 communicate with each other (referring to FIG. 7). The lower fastening pillars 143 of the bottom shell 14 are received in the pillar receiving holes 151 respectively, and each of the lower fastening pillars 143 is fastened in the pillar receiving hole 151 by a screw (not shown). The funneled feeding portions 154 communicate with the guiding channels C respectively. As a result, the granules to be ground located in the guiding channel C on each side can fall into each funneled feeding portion 154, and each funneled feeding portion 154 can collect the granules to be ground before letting them fall down.

The extending connect seat 16 has three fastening portions 161, two axial concave portions 162 and an outer circumferential portion 163. The three fastening portions 161 are connected to the extending rods 153 of the hopper 15 respectively.

The top cover 20 is threadedly coupled with the inner wall of the top rim of the tube portion 111, thereby detachably closing the upward opening 112.

The accommodating portion 122 in the inner shell 12 can be approximately divided into two rooms. The battery 30 is disposed in a room in the accommodating portion 122, and electrically connected with a charging portion 31.

The motor 40 is disposed in the other room of the accommodating portion 122. The motor 40 is electrically connected with the battery 30. The battery 30 and the motor 40 are set side by side.

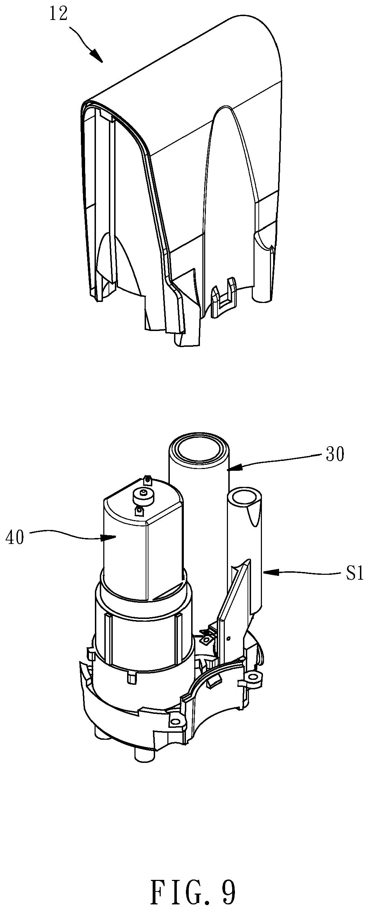

The gravity switch S1 is disposed in the accommodating portion 122. The gravity switch S1 is electrically connected with the battery 30 and the motor 40 to serve as one of the switches for controlling the battery 30 to supply power to make the motor 40 operate, referring to FIG. 9. When the bottom of the gravity switch S 1 is approximately directed downward, such as when the electric grinding device is postured as shown in FIG. 1, a counterweight inside the gravity switch S1 will fall downwardly due to gravity, and press an elastic electrical contact located thereunder to make the gravity switch S1 power-on. When the bottom of the gravity switch S1 is approximately directed upward, such as when the electric grinding device is upside down, the electrical contact will be located above the counterweight, but the counterweight will still fall downwardly due to gravity so as to leave the electrical contact, such that the gravity switch S1 will be power-off.

The transmission assembly 50 is driven by the motor 40 to operate. The transmission assembly 50 has a first gear 51, a second gear 52, and a transmission shaft 53. The first gear 51 is driven by the motor 40. The second gear 52 is driven by the first gear 51. The transmission shaft 53 is connected to the center of the second gear 52. The transmission assembly 50 is located below the battery 30 and the motor 40, and the transmission assembly 50 is located above the bottom shell 14.

The grinding sleeve 60A is disposed on the grinding sleeve installation portion 152 of the hopper 15. The grinding sleeve 60Ahas an outer sleeve 61, and an inner sleeve 62 disposed in the outer sleeve 61. The outer sleeve 61 has two axial convex portions 611, an external threaded portion 612, and two engaging protrusions 613 located on the inner wall surface. The two axial convex portions 611 are slidably embedded in the axial concave portions 162 of the extending connect seat 16 respectively. The inner sleeve 62 has two engaging recesses 621 which are engaged with the engaging protrusions 613 of the outer sleeve 61 respectively. In this way, when the outer sleeve 61 is displaced vertically, it will synchronously drive the inner sleeve 62 to displace vertically.

The grinding head 60B is connected to the bottom end of the transmission shaft 53 in an embedding manner, and the grinding head 60B is located in the inner sleeve 62 in a way that a grinding gap G is formed between the grinding head 60B and the inner sleeve 62. In this way, when the granules to be ground fall into the grinding gap G, they are ground and crushed by the grinding head 60B and the inner sleeve 62, so that the ground particles with predetermined size are obtained.

The adjusting ring 70 is connected to the bottom of the main body assembly 10. The adjusting ring 70 has a ring body 71, three connecting ribs 72, and an annular internal threaded portion 73. The top side of the ring body 71 is connected to the inner end rim of the tube portion 111 of the outer barrel 11. The three connecting ribs 72 extend from the ring body 71 inwardly. The internal threaded portion 73 is connected with the connecting ribs 72 to be suspended inside the ring body 71, and threaded onto the external threaded portion 612 of the outer sleeve 61. When the adjusting ring 70 is rotated by the user, due to the limitations that the two axial convex portions 611 of the outer sleeve 61 are axially slidably coupled with the axial concave portions 162 of the extending connect seat 16 and the internal threaded portion 73 is engaged with the external threaded portion 612, the internal threaded portion 73 of the adjusting ring 70 will drive the outer sleeve 61 of the grinding sleeve 60A to axially displace upwardly or downwardly, so as to make the inner sleeve 62 axially displace upwardly or downwardly relative to the grinding head 60B to adjust the size of the grinding gap G between the grinding head 60B and the inner sleeve 62. Besides, the outer circumferential portion 163 of the extending connect seat 16 is in contact with the inner wall of the ring body 71 of the adjusting ring 70 to provide support.

The scattering assembly 80 is disposed on the extending connect seat 16. The scattering assembly 80 has a scattering tube 81 and a scattering seat 82. The scattering tube 81 has three scattering funnels 811. The scattering seat 82 has a plurality of scattering connect portions 821, three scattering openings 822, a press switch installation portion 823, and two rotation stopping protrusions 824. Each scattering connect portion 821 is fastened to the scattering tube 81 by a screw. The three scattering openings 822 correspond to the scattering funnels 811 respectively.

The press switch S2 is disposed on the press switch installation portion 823 of the scattering seat 82. The press switch S2 is electrically connected with the battery 30 and the motor 40 to serve as another switch for controlling the battery 30 to supply power to make the motor 40 operate.

The bottom cover assembly 90 has a bottom cover frame 91 and a bottom covering plate 92. The bottom cover frame 91 is disposed on the scattering seat 82. The bottom covering plate 92 is disposed in the bottom cover frame 91. Besides, the adjusting ring 70 is positionally limited between the outer barrel 11 and the bottom cover frame 91. The bottom cover frame 91 has a frame engaged rim 911, two rotation stopping recesses 912, a pressing portion 913, and three covering plate positioning grooves 914. The bottom covering plate 92 has three positioning tabs 921 positioned in the covering plate positioning grooves 914 respectively. As a result, the bottom cover frame 91 and the bottom covering plate 92 can be combined or detached in a rotation manner.

During the rotation, the pressing portion 913 of the bottom cover frame 91 can contact and press the press switch S2 to make it power-on. Specifically speaking, when the bottom cover assembly 90 is rotated to make one of the rotation stopping recesses 912 positioned at one of the rotation stopping protrusions 824 of the scattering seat 82, the scattering openings 822 of the scattering seat 82 are covered by the bottom covering plate 92. When the bottom cover assembly 90 is reversely rotated to make the other rotation stopping recess 912 positioned at the other rotation stopping protrusion 824 of the scattering seat 82, the cover openings 922 of the bottom covering plate 92 are aligned with the scattering openings 822 of the scattering seat 82 respectively.

Continuing with the above description, when the bottom cover assembly 90 is rotated to make the cover openings 922 of the bottom covering plate 92 aligned with the scattering openings 822 of the scattering seat 82, the press switch S2 is in contact with the pressing portion 913 and thereby power-on. When the bottom cover assembly 90 is rotated to make the bottom covering plate 92 cover the scattering openings 822 of the scattering seat 82, the pressing portion 913 leaves the press switch S2 to make it power-off.

The turn-on manner for using the electric grinding device provided by the present invention is that it is turn on to rotate for grinding only when the press switch S2 is power-on and the gravity switch S1 is also power-on. In other words, only when the electric grinding device is kept in the upright status and the user actively rotates the bottom cover assembly 90 to make the cover openings 922 of the bottom covering plate 92 aligned with the scattering openings 822 of the scattering seat 82, the electric grinding device is in the power-on status for grinding. In this way, the electric grinding device provided by the present invention has dual power switch turning on mechanism to positively avoid unintentional operation and unexpected turning on. When any one of the press switch S2 and the gravity switch S1 is power-off, such as when the electric grinding device is placed upside down or the user actively rotates the bottom cover assembly 90 to make the bottom covering plate 92 cover the scattering openings 822, the electric grinding device will be in the power-off status, thereby not turn on to rotate for grinding.

It can be known from the above description that the present invention has two guiding channels C and two funneled feeding portions 154 in coordination therewith, thereby formed with two feeding passageways. No matter the electric grinding device is used in the inclined or upright status, the granules to be ground can be guided smoothly from the material storing space to fall in an evenly dispersed manner into the grinding gap G to be ground.

As to the adjustment of the size of the ground particles, when the user rotates the adjusting ring 70 to make the internal threaded portion 73 thereof threadedly rotate the external threaded portion 612 of the outer sleeve 61, the outer sleeve 61 can be axially moved upwardly or downwardly to axially move the inner sleeve 62 upwardly or downwardly relative to the grinding head 60B. Because the inner sleeve 62 and the grinding head 60B are relatively cone-shaped therebetween, the grinding gap G can be narrowed or widened.

Besides, the assembling structure of the present invention is relatively more beneficial for the manufacture and assembly of the components.

Except for the above instanced description, the present invention may be implemented with the following variations.

For example, the outer barrel 11 and the inner shell 12 may be formed integrally. Alternatively, the bottom shell 14 and the hopper 15 may be formed integrally. Alternatively, the hopper 15 and the extending connect seat 16 may be formed integrally.

It can be known from the description of each above embodiment that the present invention is formed with two guiding channels C between the tube portion 111 and the accommodating portion 122, enabling the material to be ground to be fed through any one of the guiding channels C, thereby certainly attaining the objective of the present invention. Besides, the present invention is controlled to be power-on and power-off by the bottom cover assembly 90 rotatably contacting the press switch S2 and the gravity switch S1 operated according to the posture of the electric grinding device, which can prevent the electric grinding device from unexpected operation, thereby attaining another objective of the present invention. In addition, the user can adjust the size of the ground particles only by rotating the adjusting ring 70, which is quite intuitive, simple and convenient in usage.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. An electric grinding device, characterized comprising:
a main body assembly (10) having an outer barrel (11), an inner shell (12) disposed in the outer barrel (11), two guiding channels (C) formed between the outer barrel (11) and the inner shell (12), and a hopper (15) located below the two guiding channels (C) and communicating with the two guiding channels (C);
a battery (30) disposed in the inner shell (12);
a motor (40) disposed in the inner shell (12) and electrically connected with the battery (30);
a transmission assembly (50) driven by the motor (40), the transmission assembly (50) having a transmission shaft (53);
a grinding sleeve (60A) located below the hopper (15); and
a grinding head (60B) connected to the transmission shaft (53) and accommodated in the grinding sleeve (60A) in a way that a grinding gap (G) communicating with the hopper (15) is formed between the grinding head (60B) and the grinding sleeve (60A).

2. The electric grinding device as claimed in claim 1, **characterized in that** the hopper (15) comprises two funneled feeding portions (154); the two funneled feeding portions (154) communicate with the two guiding channels (C) respectively and communicate with the grinding gap (G); top parts of the two guiding channels (C) communicate with each other; bottom parts of the two guiding channels (C) are separated from each other; top parts of the two funneled feeding portions (154) are separated from each other; bottom parts of the two funneled feeding portions (154) communicate with each other.

3. The electric grinding device as claimed in claim 2, **characterized in that** the outer barrel (11) has an accommodating space (115) which is cone-shaped with a wide top and a narrow bottom; the inner shell (12) is disposed in the accommodating space (115) to partition off the accommodating space (115) into the two guiding channels (C).

4. The electric grinding device as claimed in claim 3, **characterized in that** the inner shell (12) has two guiding surfaces (127) facing the guiding channels (C) respectively; each of the guiding surfaces (127) is recessed with a guiding groove (129) extending vertically.

5. The electric grinding device as claimed in claim 4, **characterized in that** each of the guiding grooves (129) has a recession width which is relatively smaller at a top of the guiding groove (129) and relatively larger at a bottom of the guiding groove (129), and a recession depth which is relatively smaller at the top of the guiding groove (129) and relatively larger at the bottom of the guiding groove (129).

6. The electric grinding device as claimed in claim 2, **characterized in that** the outer barrel (11) is provided at a top rim thereof with an upward opening (112); the inner shell (12) has a top portion which is arc-shaped, and the top portion is located lower than the upward opening (112) to cause the top parts of the two guiding channels communication with each other; the inner shell (12) is provided on two opposite sides thereof with two abutting portions (121); each of the abutting portions (121) is connected to an inner wall surface of the outer barrel (11) to cause the bottom parts of the two guiding channels (C) separated from each other.

7. The electric grinding device as claimed in any of claims 1 to 6, **characterized in that** the electric grinding device further comprises a gravity switch (S1), a scattering assembly(80), a bottom cover assembly (90) and a press switch (S2); the gravity switch (S1) is electrically connected with the battery (30); the gravity switch (S1) is power-on when being postured upright, and the gravity switch (S1) is power-off when being postured upside down; the scattering assembly (90) is connected to the main body assembly (10) to be located below the grinding sleeve (60A) and the grinding head (60B); the press switch (S2) is disposed on the scattering assembly (80) and electrically connected with the battery (30); the bottom cover assembly (90) has a pressing portion (913), and the bottom cover assembly (90) is rotatably disposed on the scattering assembly (80) to enable the pressing portion (913) to contact the press switch (S2) to make the press switch (S2) power-on and enable the pressing portion (913) to leave the press switch (S2) to make the press switch (S2) power-off; the motor (40), the battery (30), the gravity switch (S1) and the press switch (S2) are arranged in a way that only when the gravity switch (S1) and the press switch (S2) are both power-on, the battery (30) supplies power to the motor (40) to make the motor (40) operate.

8. The electric grinding device as claimed in claim 7, **characterized in that** the scattering assembly (80) has at least one scattering opening (822) and two rotation stopping protrusions (824); the at least one scattering opening (822) communicates with the grinding gap (G); the bottom cover assembly (90) has a bottom cover frame (91) and a bottom covering plate (92) disposed in the bottom cover frame (91); the bottom cover frame (91) has the pressing portion (913) and two rotation stopping recesses (912), and the bottom covering plate (92) has at least one cover opening (922); when the bottom cover assembly (90) is rotated relative to the scattering assembly (80), one of the two rotation stopping recesses (912) is enabled to be engaged with one of the two rotation stopping protrusions (824) to make the pressing portion (913) contact the press switch (S2) and the at least one cover opening (922) correspondingly communicate with the at least one scattering opening (822); when the bottom cover assembly (90) is reversely rotated relative to the scattering assembly (80), the other rotation stopping recess (912) is enabled to be engaged with the other rotation stopping protrusion (824) to make the pressing portion (913) leave the press switch (S2) and the bottom covering plate (92) cover the at least one scattering opening (822).

9. The electric grinding device as claimed in any of claims 1 to 8, **characterized in that** the electric grinding device further comprises an adjusting ring (70); the adjusting ring (70) is rotatably connected to the main body assembly (10) and has an internal threaded portion (73); the main body assembly (10) has an axial concave portion (162); the grinding sleeve (60A) has an axial convex portion (611) and an external threaded portion (612); the axial convex portion (611) and the axial concave portion (162) are slidably coupled; the external threaded portion (612) is threaded into the internal threaded portion(73); when the adjusting ring (70) is rotated, the external threaded portion (612) of the grinding sleeve (60A) is driven by the internal threaded portion (73) of the adjusting ring (70) so that the grinding sleeve (60A) is axially displaced relative to the grinding head (60B) to adjust the grinding gap (G) between the grinding sleeve (60A) and the grinding head (60B).
